# EUROPEAN PATENT SPECIFICATION

(11) **EP 0 399 366 B1**
(45) Date of publication and mention of the grant of the patent: **30.11.1994**
(21) Application number: 90109286.6
(22) Date of filing: 16.05.1990
(51) Int. Cl.: B60J 3/02

(54) **Support bracket to be attached to automobile sun visors**
Stützträger zum Anbringen an einer Fahrzeug-Sonnenblende
Support d'appui à poser sur un pare-soleil de véhicule

(30) Priority: 26.05.1989 ES 8901785
(43) Date of publication of application: 28.11.1990
(73) Proprietor: FICO I.T.M., S.A., E-08027 Barcelona (ES)
(72) Inventor: Cebollero, Gabas Carlos, E-08029 Barcelona (ES)
(74) Representative: Schwabe - Sandmair - Marx

(56) References cited:
- DE-A- 3 008 361
- GB-A- 1 241 992
- GB-A- 1 420 246
- GB-A- 2 149 365
- US-A- 4 773 698

## Description

### BACKGROUND OF THE INVENTION

### 1. Field of the Invention

The subject of this invention is a support bracket that can be attached to automobile sun visors and particularly to sun visors covered with a fabric, leather or similar material.

### 2. Description of the Prior Art

It is well known that car sun visors usually consist basically of a relatively stiff body, such as polyurethane foam, and that this body surrounds a structural frame generally made of stiff plastic materials. This reinforcing frame includes or incorporates both the support shaft and the support bracket of the visor, the former for the purpose of allowing the user to shift the sun visor to different positions and the later for the purpose of ensuring, by pressing it into a hook provided in the roof of the automobile interior, that the sun visor remains immobilised in its normal position of use as envisaged by the manufacturer of the vehicle. A support bracket forms the side that closes off a U-shaped opening in the sun visor. This support bracket is usually formed by the actual visor itself, as shown in Spanish utility models nos. 292-645 and 8701253.

However, the same inventor has designed a sun visor (utility model application no. U 8901522) with a covering made solely of fabric or leather materials. These can even be the same as those used for lining the interior of the vehicle. In these cases the support bracket cannot be fashioned at origin because it would be impossible to cover it accordingly.

British patent specification GB-A-1 241 992 shows a support according to the preamble of claim 1 bracket that is made up of a main body 10 comprising two shanks 17, 20. Said two shanks 17, 20 are joined together on one of their sides by a weak joint 19 that acts like a hinge or film hinge; the shanks 17, 20 can rotate around this hinge to become coupled face to face. In the coupled state, the two shanks make up the main body 10 of the support bracket and are locked up in a coupled position by the interlocking catches 21 and 18.

The support bracket proposed in the above-mentioned document does however show certain disadvantages. The most obvious of these disadvantages is the fact that when the two shanks 17, 20 are in the coupled position, this position is only maintained by the film hinge 19 on one side of the support bracket and the catches 18, 21 on the opposite side of the support bracket. A film hinge like the one employed in the above-mentioned and known bracket is a very thin and fragile part. Such fragile film hinges may break, causing problems. Another disadvantage of the above-mentioned support bracket concerns its one-piece structure with the frame for the sun visor. The utilisation of this support bracket is therefore limited to sun visors which are adapted to fit into said frame. The final disadvantage to be mentioned here is the fact that the sun visor once attached to the holding means of the automobile ceiling with a support bracket according to this document is fixed there and cannot be removed.

Another supporting means for a sun visor is described in US-A-4,773,698. According to this document an axle attachment for a sun visor assembly is proposed which is intended to be mounted to a U-shaped recess provided in the upper edge of a sun visor. It comprises a one piece main body forming a support bar, namely the axle 1. An approximately rectangular slot surrounded by said axle and the lower portion of this support bracket is provided. The support bracket according to the above-mentioned document D1 is attached to a locking element 9 mounted in the sun visor by means of two pegs 5, 6 which terminate in locking tongues 7, 8.

Obviously a support bracket as described above can only be mounted to a sun visor that comprises said additional locking element 9 and is therefore disadvantageously limited in utilization, i.e. can only be used for sun visors that are equipped with such a locking element 9 that has to be mounted to the sun visor during its production process.

It is the object of the invention to propose a support bracket to be attached to an automobile sun visor which overcomes the above disadvantages of the prior art solutions.

This object is achieved by a support bracket showing the features described in the characterizing portion of claim 1.

A main advantageous feature of the support bracket according to the present invention is that by maintaining the coupled position of the shanks by at least two units of interlocking catches and additionally by the film hinge, this coupled state is supported at three locations of the support bracket. If the film hinge of the support bracket is damaged or broken, it maintains nevertheless its coupled state without any problems. Another advantage of the support bracket proposed by the teaching of the new patent claim concerns its ability to be fastened securely to a sun visor which only has to comprise a U-shaped opening formed in its body and does not need a specifically formed frame. When securely coupled at the above-mentioned three locations by the already described means, the support bracket with the fixed support bar may be clipped into holding means provided in the ceiling of the automobile by means of this support bar and can be removed therefrom if the user wishes to do this.

### BRIEF DESCRIPTION OF THE DRAWINGS

The drawings enclosed with this specification show the support bracket to be attached to automobile sun visors referred to in this invention. In the drawings:
- Figure 1: is a cross-sectional view of the subject of the invention before it is fitted to a sun visor;
- Figure 2: is a cross-sectional view of the subject of the invention;
- Figure 3: is a cross-sectional view of the subject of the invention corresponding to line III-III in figure 4;
- Figure 4: is a front view of the subject of the invention fitted to a sun visor.

### DESCRIPTION OF THE PREFERRED EMBODIMENTS

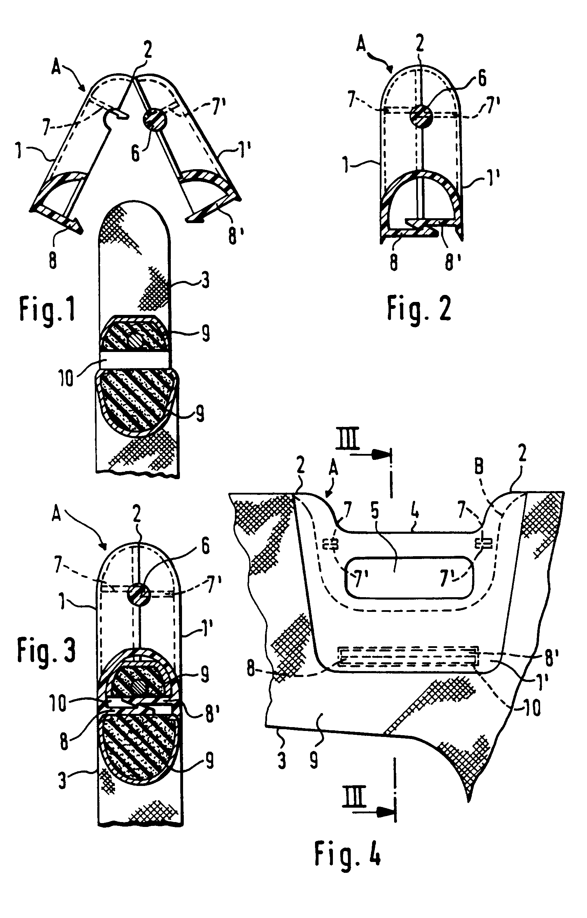

The support bracket to be attached to automobile sun visors which is the subject of this invention and which is described here as an example consists of the main body A made from materials suitable for the use and purpose envisaged, preferably plastic materials. The support bracket comprises two shanks 1 and 1' identical in external shape and form, which are joined at one of their sides by means of a weak joint 2 acting as a hinge or a film hinge, around which said shanks can rotate and become coupled face to face, as shown in figures 1 and 2 of the drawings pertaining to this embodiment.

The external shape and form of shanks 1 and 1' of the main body A correspond to the U-shaped outline B in the sun visor 3 on one of its longest sides as shown in figure 4 on the sheet of drawings pertaining to this embodiment. Thus, when both shanks 1 and 1' are coupled together as shown in figure 2, they define a support bar 4 and a rectangular slot 5, as seen in figure 4.

Said support bar 4, which in this embodiment is circular in section as shown in figures 1, 2 and 3, is of the same length and cross-section as a hook (which is not shown on the sheet of drawings pertaining to this embodiment) provided in the roof of the vehicle's interior for fixing the sun visor 3 in its normal position of use, and into which the support bar 4 is inserted.

The rectangular slot is big enough to accomodate the corresponding part of the support in the roof of the vehicle described above when the support bar 4 has been inserted therein.

The support bar 4 defined by both shanks 1 and 1' when they are coupled together as shown in figures 2, 3 and 4 is formed of the crosspiece 6 which is strong enough and suitable for the function assigned to it. It is preferably solid and circular in section, like in the embodiment illustrated in the drawings. It can also be seen that said crosspiece 6 is an integral part of the shank 1'.

In this embodiment of the support bracket attachable to automobile sun visors described here, each of the shanks 1 and 1' making up the main body A has two interlocking catches at both ends of the support bar 4, as shown in figure 4 on the enclosed sheet of drawings. Shank 1 carries both interlocking catches 7', said interlocking catches 7 and 7' being set facing each other such that once interlocked they cannot become disattached, as shown in figures 2 and 3 of the enclosed sheet of drawings.

Both pairs of interlocking catches 7 and 7' envisaged in this embodiment of the subject of the invention are for the purpose of joining together both shanks 1 and 1' when they become coupled face to face as shown in figure 2 on the enclosed sheet of drawings, thereby avoiding in the case of breakage or wear of the weak joint or film hinge 2 that the shanks 1 and 1' come apart at precisely the side along which they are joined, which would make the attachable support bracket inoperative.

For joining the main body A of the attachable support bracket referred to in the invention to the sun visor 3, each of the shanks 1 and 1' has a longitudinal interlocking catch located respectively on the side of the shank opposite the side with the weak joint or film hinge 2, as shown in all the figures on the sheet of drawings pertaining to this embodiment. Said shank 1 has a longitudinal interlocking catch 8 and shank 1' has a longitudinal interlocking catch 8'. Said interlocking catches 8 and 8' are set facing each other such that once interlocked or clipped together they cannot become disconnected as shown in figures 2 and 3 of the enclosed sheet of drawings.

The longitudinal interlocking catches 8 and 8' are generously dimensioned to ensure a good connection of the main body A of the attachable support bracket and the sun visor 3.

In the figures the sun visor 3 has been drawn with its covering 9. This can be made from either fabric or leather materials which can even be the same as those used for lining the interior of the vehicle, particularly those used for lining the roof and door panels, or from plastic materials or fabrics with a layered plastic support. Said sun visor 3 contains a slot 10 which corresponds in terms of size with the longitudinal interlocking catches 8 and 8' when the latter are clipped together, so that both longitudinal interlocking catches 8 and 8' fit snugly into said slot 10 once they are coupled or clipped together.

Fitting the attachable support bracket referred to to the sun visor 3 after the latter's covering 9 has been applied, is shown in figures 1, 3 and 4 of the sheet of drawings pertaining to this embodiment. Figure 1 shows shanks 1 and 1' that make up the main body A when pressed together but without going so far as actually inter-connecting, indicating how they can be inserted into the opening defined by the U-shaped outline B on one of the longest sides of the sun visor 3. Figures 2 and 4 show the attachable support bracket mounted on the sun visor 3 after the clipping together of interlocking catches 7 and 7' as well as the longitudinal interlocking catches 8 and 8'. These latter are located in the slot 10 of the sun visor 3, thereby ensuring a firm coupling between the shanks 1 and 1' that make up the main body A and a firm coupling between the sun visor 3 and the support bracket according to the invention.

## Claims

1. A support bracket to be attached to automobile sun visors, comprising
a) a main body (A) made up of two shanks (1, 1') of identical shape and volume,
b) a weak joint (2) joining said two shanks (1, 1') together on one of their sides, said weak joint (2) acting like a film hinge around which said shanks (1, 1') can rotate to become coupled face to face,
**characterized by** the following features:
c) in a coupled position of said two shanks (1, 1') a support bar (4) is formed by means of a crosspiece (6) comprised in one of the shanks (1, 1');
d) an approximately rectangular slot is surrounded by said support bar (4) and the lower portion of said support bracket,
e) each of the shanks (1, 1') has at least two units of interlocking catches (7, 7'; 8, 8') locking the coupled position of said support bracket,
f) a first pair of interlocking catches (7, 7') is positioned near the location of said support bar (4), and
g) a second pair of interlocking catches (8, 8') is positioned opposite the side with the weak joint (2) of the support bracket.

## Patentansprüche

1. Stützträger zum Anbringen an Fahrzeug-Sonnenblenden mit
a) einem aus zwei Schäften (1, 1') von identischer Form und Volumen aufgebauten Hauptkörper (A),
b) einer die beiden Schäfte (1, 1') an einer ihrer Seiten verbindenden schwachen bzw. nachgiebigen Verbindung (2), wobei die nachgiebige Verbindung (2) wie ein Filmscharnier wirkt, um welches die Schäfte (1, 1') rotieren können, um Fläche an Fläche gekoppelt zu werden,
gekennzeichnet durch die folgenden Merkmale:
c) in einer gekoppelten Position der beiden Schäfte (1, 1') wird mittels eines Querstückes (6), das in einem der Schäfte (1, 1') vorgesehen ist, ein Trägerstab (4) ausgebildet;
d) ein in etwa rechtwinkliger Schlitz wird von dem Trägerstab (4) und dem unteren Abschnitt des Stützträgers umgeben;
e) jeder der Schäfte (1, 1') hat mindestens zwei Einheiten von ineinandergreifenden Verriegelungen (7, 7'; 8, 8'), die die gekoppelte Position des Stützträgers einrasten;
f) ein erstes Paar ineinandergreifender Verriegelungen (7, 7') ist in der Nähe des Ortes des Trägerstabes (4) angeordnet; und
g) ein zweites Paar von ineinandergreifenden Verriegelungen (8, 8') ist gegenüber der Seite mit der nachgiebigen Verbindung (2) des Stützträgers angeordnet.

## Revendications

1. Support d'appui à poser sur un pare-soleil de véhicule automobile comportant :
a) un corps principal (A) constitué de deux branches (1, 1') de forme et de volume identiques,
b) un lien souple (2) solidarisant les deux branches (1, 1') précitées, sur l'une de leurs faces, ledit lien souple (2) agissant comme un film d'articulation autour duquel lesdites branches (1, 1') peuvent tourner pour être accouplées face à face,
caractérisé par les dispositions suivantes :
c) dans une position d'accouplement des deux branches (1, 1') précitées, une barre support (4) est formée par une pièce transversale (6) comprise dans l'une des branches (1, 1') ;
d) une fente approximativement rectangulaire est délimitée par ladite barre support (4) et la portion inférieure dudit support d'appui ;
e) chaque branche (1, 1') présente au moins deux paires de crochets de verrouillage réciproque (7, 7' ; 8, 8') verrouillant ledit support d'appui dans sa position d'accouplement,
f) une première paire de crochets de verrouillage réciproque (7, 7') est située à proximité du logement de ladite barre-support (4), et
g) une seconde paire de crochets de verrouillage réciproque (8, 8') est située à l'opposé du côté où se trouve le lien souple (2) du support d'appui.
